# EUROPEAN PATENT APPLICATION

(11) **EP 1 953 697 A1**
(43) Date of publication of application: **06.08.2008**
(21) Application number: 06822493.0
(22) Date of filing: 27.10.2006
(51) Int. Cl.: G06Q 50/00, B65G 61/00

(54) **SHARED SERVICE RESOURCE CONTROL SYSTEM AND SHARED SERVICE RESOURCE CONTROL METHOD**

(30) Priority: 28.10.2005 JP 2005314509
(71) Applicant: OMRON Corporation, a corporation of Japan, Shiokoji-dori, Shimogyo-ku Kyoto-shi Kyoto 600-8530 (JP)
(72) Inventor: FUJII, Hiroshi, c/o Omron Corporation, 801, Minamifudodo-cho, Kyoto-shi, Kyoto 600-8530 (JP); KIMURA, Takafumi, c/o Omron Corporation, 801, Minamifudodo-cho, Kyoto-shi, Kyoto 600-8530 (JP); HISANO, Atsushi, c/o Omron Corporation, 801, Minamifudodo-cho, Kyoto-shi, Kyoto 600-8530 (JP)
(74) Representative: Calderbank, Thomas Roger
(86) International application number: PCT/JP2006/321532
(87) International publication number: WO 2007/049758

(57) **Abstract**

An owner code (service-recipient code) assigned to a package, which is an object to which a service is provided by transportation installations or facilities (i.e., shared service resource) including a pickup branch office 2, a first transit station 3, a second transit station 4 and a delivery transit station 5, is read at the transit stations 3, 4. An owner (recipient) designated by the service-recipient code is authorized with a control right which enables the owner to control a service (i.e., package delivery treatment performed in the transit stations 3, 4) provided by the shared service resource with respect to the package (service-provided object).

## Description

### TECHNICAL FIELD

The present invention relates to a system for controlling a shared service resource and a method for controlling a shared service resource which enable respective co-owners to individually control shared service resources.

### BACKGROUND ART

An electronic key system described in; for example, Patent Document 1, is available as a system for controlling an apparatus shared among a plurality of persons. The electronic key system has a mechanism in which an electronic key (110) of a co-owner transmits approval information to a shared door lock open/close apparatus (130) and in which, when the approval information matches with information previously stored in the shared door lock open/close apparatus (130), the shared door lock open/close apparatus (130) opens or closes the lock of the shared door of a condominium. Reference numerals in parentheses are used in Patent Document 1. The same also applies to counterpart descriptions in the following section.

However, in the mechanism of the electronic key system, such as that mentioned above, control is effected in such a way that the shared door lock open/close apparatus (130) operates when approval information transmitted from the electronic key (110) of the co-owner to the shared door lock open/close apparatus (130) matches with the information previously stored in the shared door lock open/close apparatus (130). Therefore, in order to control a shared apparatus, such as a shared door lock open/close apparatus, common information must be registered in both a side that performs controlling (the electronic key) and a side to be controlled (the shared door lock open/close apparatus). When such common information is not registered in the side to be controlled, the electronic key cannot control the shared apparatus, and the electronic key is not entitled to control the shared apparatus.

In such a mechanism of the electronic key system, control of a shared apparatus requires registration of common information in both a side to be controlled and a side that performs controlling. Accordingly, in a shared service resource not having such common information; for example, a transportation installation or facility such as pickup branch offices, transit stations, and delivery branch offices in a delivery service system, a service recipient (an owner of a package to be delivered in this case) cannot change, as required, service provision processing; namely, processing for sorting packages and rendering packages waterproof which is performed at the transit station and processing relevant to delivery of packages. Therefore, when the owner conceives and desires to change such service provision processing, the owner instructs a change in service provision processing by communication with a freight company that offers a delivery service system. In accordance with the instruction for change from the owner, the delivery company must change service provision processing by searching a package of the owner on the responsibility of the delivery company. There is a problem of a heavy burden being imposed on the delivery company.
Patent Document 1: Japanese Patent Publication No. 2004-232277A

### DISCLOSURE OF THE INVENTION

### Problem to be solved by the Invention

The present invention has been conceived to solve the problem and provides a shared service resource control system and a resource control method therefor, wherein a recipient who receives service provision processing stemming from a shared service resource can control service provision processing with respect to an object of service provision over which the recipient has an authority.

### How to Solve the Problem

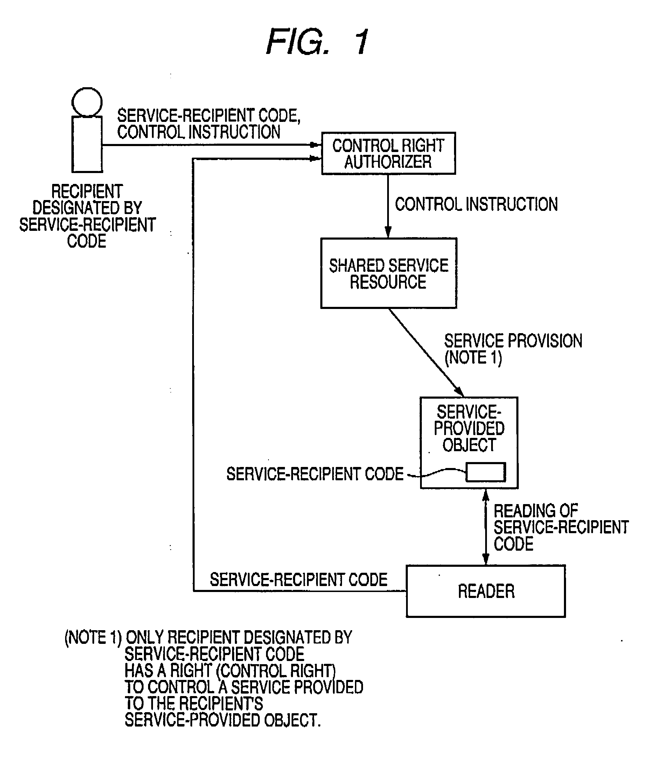

The present invention provides a system for controlling a shared service resource, comprising:
a reader, configured to read a service-recipient code which is assigned to an object to which a service provided by the shared service resource; and
a control right authorizer, configured to authorize a control right which enables to control the service with respect to the object to a recipient designated by the service-recipient code (see Fig. 1).

The present invention also provides a method for controlling a shared service resource, comprising:
reading a service-recipient code which is assigned to an object to which a service provided by the shared service resource; and
authorizing a control right which enables to control the service with respect to the object to a recipient designated by the service-recipient code (see Fig. 1).

The "reader" is changed, as required, according to a recorded form of the service-recipient code. For instance, when the recipient code is recorded on recording sheet as an optically readable code, such as a bar code (a one-dimensional code) or a QR code (a two-dimensional code), a section for reading the optically readable code from the recording sheet serves as the "reader." Moreover, in the case of a recorded form in which the recipient code is stored in a storage in an RFID tag, an RFID reader/writer for reading a service-recipient code from the RFID tag and an appurtenant antenna of the reader/writer serve as the "reader."

The "shared service resource" corresponds to a resource made up of a tangible substance capable of offering service for a plurality of recipients under given control, such as a facility, machinery, and equipment, and an intangible substance, such as software. Examples of the shared service resource include (1) transportation installations or facilities, such as pickup branch offices, transit stations, and delivery branch offices in a delivery service system; (2) a processing machine of a processing factory in a processing service system; (3) an imaging device including a camera in a service system for ascertaining school attendance or leaving; (4) a server for distributing sales information about commercial products to a client manufacturer in a sales information distributing service system; and the like.

The "object" is an object to which a service is provided by the shared service resource; and includes tangible substances, such as articles, persons, and animals and plants, or intangible substances, such as electronic data.

In the example where electronic data are taken as an object of service provision, electronic data processing software provided by an ASP (Application Service Provider), for instance, serves as a shared service resource. In this case, it may also be possible to read a service-recipient code from electronic data pertaining to the recipient transmitted to the ASP; to provide the recipient designated by the service-recipient code with a right to control electronic data processing service offered by the ASP; and to control the electronic data processing service offered to the recipient by the ASP.

The "service-recipient code" is a code that can designate a recipient individually or on a per-group basis. For example, an IP address, a MAC address, or another code capable of specifying and designating a recipient, can be adopted as such a "service-recipient code."

The "designated by the service-recipient code" includes not only a case where designation is performed by a service-recipient code read by the reader, but also, for instance, a case where designation is performed by a service-recipient code of a recipient transmitted from the recipient who desires control a service provided to the object, a case where designation is performed by a service-recipient code acquired by a method other than the reader, and the like.

The "authorizing a control right" includes; for instance, operations for temporarily storing a service-recipient code transmitted from a recipient, checking a match between the stored service-recipient code and a service-recipient code read by the reader, and authorizing the recipient designated by the service-recipient code with a right to control the service provided to the object when the match exists; and operations for temporarily storing a service-recipient code read by the reader, checking a match between the stored service-recipient code and a service-recipient code transmitted from the recipient, and authorizing the recipient designated by the service-recipient code with the right when the match exists.

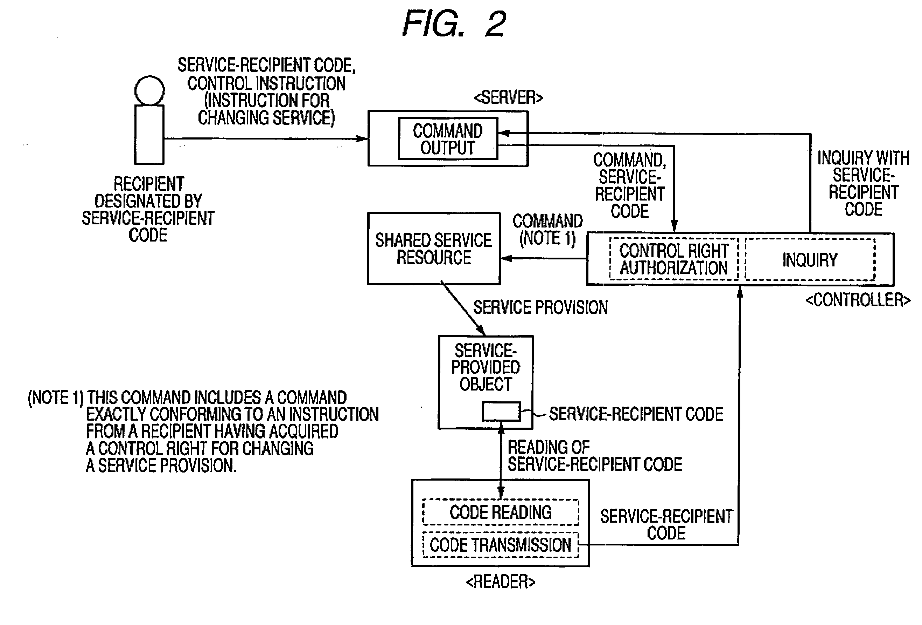

The present invention also provides a system for controlling a shared service resource, comprising:
a reader;
a server; and
a controller, wherein:
   the reader is configured to read a service-recipient code which is assigned to an object to which a service provided by the shared service resource (code reading), and configured to transmit the service-recipient code to the controller (code transmission);
   the server is configured to check, when an inquiry is received from the controller with the service-recipient code, whether an instruction from a recipient designated by the service-recipient code has been stored in the server, and configured to output, when the instruction has been stored, the service-recipient code and a command for causing the controller to treat the object in accordance with the instruction to the controller (command output); and
   the controller is configured to issue, when the service-recipient code transmitted from the reader is inputted, the inquiry with the service-recipient code with respect to the server (inquiry), and configured to check whether a match is found between the service-recipient code sent from the server together with the command and the service-recipient code sent from the reader, configured to authorize, when the match is found, a control right to the recipient designated by the service-recipient code, and configured to treat the object in accordance with the instruction from the recipient authorized with the control right (control right authorization) (see Fig. 2).

The instruction includes an instruction for changing the service which has been requested from the recipient.

In a case where the above example (1) is applied, the system may be configured such that: the shared service resource includes transportation installations or facilities including a pickup branch office, a transit station and a delivery branch office; the object is a package delivered by the transportation installations or facilities; the recipient is an owner of the package; and the service is a treatment in connection with the delivery of the package including an assortment performed in the transportation installations or facilities.

In a case where the above example (2) is applied, the system may be configured such that: the shared service resource is a processing machine disposed in a processing factory; the object is an article to be processed by the processing machine; the recipient is a proprietor of the article; and the service is processing with respect to the article performed by the processing machine.

In a case where the above example (3) is applied, the system may be configured such that: the shared service resource is an imaging device including a camera; the object is a child to be captured by the camera; the recipient is a legal guardian of the child; and the service is a provision of a camera-captured image of the child who attends to or leaves from a school.

In a case where the above example (4) is applied, the system may be configured such that: the shared service resource is a server configured to distribute sales information of a commercial product to a client manufacturer the object is the commercial product; the recipient is the client manufacturer; and the service is a distribution of the sales information to the client manufacturer.

In the case of the example (1), for instance, an owner code given to an owner of the package may be used as the service-recipient code, and the owner may make a request for changing a treatment of the package by way of a terminal with the owner code and a package ID assigned to the package. Next, the request may be accepted, and a right to control treatment related to delivery of the package assigned with the package ID may also be given to the owner designated by the owner code. Upon acquisition of the control right, the owner can control treatment of the packages performed by facilities related to delivery in a transit station, and the owner may also be made possible to change specifics of treatment of the packages, as required.

In the case of the example (2), for instance, a proprietor code given to a proprietor of the object may be used as the service-recipient code. When the proprietor makes a request for changing treatment of the object from a terminal with the proprietor code and an object ID assigned to the object. When the request is accepted, a control right to control processing related to machining of the object assigned with the object ID may also be given to the proprietor designated by the proprietor code. Upon acquisition of the control right, the proprietor can control processing performed by a processing machine in a processing factory, and the proprietor can appropriately change specifics of processing of the object, as required.

In the case, of the example (3), for instance, a parent code (a code assigned to a legal guardian of a child whose image is to be captured by a camera of an imaging device) may also be used as the service-recipient code. When the parent code transmitted from a terminal of the legal guardian is accepted, a control right which enables the legal guardian to cause the imaging device to transmit the captured image is authorized to the legal guardian designated by the parent code.

In the case of the example (4), for instance, a client code (a code assigned to a client manufacturer of commercial products) may also be used as the service-recipient code. When the client code transmitted from a terminal by the client manufacturer is accepted, a control right which causes a server to transmit sales information of a commercial product is authorized to the client manufacturer.

The above-described invention can be applied to; for example, nursing care service, as well. In this case, the system comprises the following specifics.
(1) shared service resource: a nursing care center
(2) object: a person subjected to nursing care (a service-recipient code is assigned to the person to be cared)
(3) service-recipient: a family or a relative of the person to be cared
When the above specifics are applied to the present invention, an arrangement may also be made in such a way that, when a nursing care vehicle carrying a person to be cared passes through a gate of a nursing care center, a service-recipient code is read from the person to be cared; such that a control right to nursing care service processing performed in the nursing care center is provided to a recipient designated by the service-recipient code; and such that the recipient himself/herself can set or change specifics of nursing care service processing offered to the person to be cared. As a result, for instance, bathing service can be added later at a recipient's discretion.

### Advantage of the Invention

According to the present invention, there is adopted a configuration in which a reader is configured to read a service-recipient code which is assigned to an object to which a service provided by the shared service resource, and a control right authorizer is configured to authorize a control right which enables to control the service with respect to the object to a recipient designated by the service-recipient code. Therefore, the recipient subjected to service provision performed by the shared service resource can control service provision, as required, by acquiring a control right through use of the service-recipient code and appropriately setting or changing the service provided to the object in accordance with the control right. Thus, it is advantageous that a reduction in a burden of the service authorizer incident to the setting or change.

### BRIEF DESCRIPTION OF THE DRAWINGS

Fig. 1 is a general descriptive view of a shared service resource control system and a shared service resource control method to which the present invention is applied.
Fig. 2 is a general descriptive view of a shared service resource control system to which the present invention is applied.
Fig. 3 is an entire view of a delivery service system that is an embodiment of the present invention.
Fig. 4 is a detailed descriptive view of a transit station of the delivery service system shown in Fig. 3.
Fig. 5 is a descriptive view of a package management table used in the delivery service system shown in Fig. 3.
Fig. 6 is a descriptive view of a processing service system that is an embodiment of the present invention.
Fig. 7 is a descriptive view of a processing management table used in the processing service system shown in Fig. 6.
Fig. 8 is a descriptive view of a service system for ascertaining school attendance and leaving school that is an embodiment of the present invention.
Fig. 9 is a descriptive view of a sales information distributing service system that is an embodiment of the present invention.

### Descriptions of the Reference Numerals

- 1: delivery service system
- 2: pickup branch office
- 3: first transit station
- 4: second transit station
- 5: delivery branch office
- 6: first server
- 7: second server
- 8: RFID tag
- 9: database
- 10: package management table
- 11: terminal
- 12: sorter
- 13: PLC (controller)
- 14: package arrival path
- 15A, 15B, 15C: ejector
- 16A, 16B, 16C: branch paths
- 17: shipment path
- 18: gate
- 19A, 19B, 19C: RFID reader/writer
- 20A, 20B, 20C: antenna
- 30: processing service system
- 31: processing factory
- 32: transfer path
- 33: processing machine
- 34: processing management database
- 35: processing management table
- 36: non-processing path
- 50: service system for ascertaining school attendance and leaving school
- 51: gate
- 52: imaging device
- 53: knapsack
- 54: server
- 60: sales information distributing service system
- 61: server
- 62: database
- E: consumer's house
- M: owner of package
- P (P1, P2, ... Pn): packages
- Q: processed object
- S: delivery center
- T: kindergarten pupil
- U: parent
- V: commercial product
- W: client manufacturer

### BEST MODE FOR IMPLEMENTING THE INVENTION

A best mode for implementing the present invention will be described in detail hereunder with reference to the accompanying drawings.

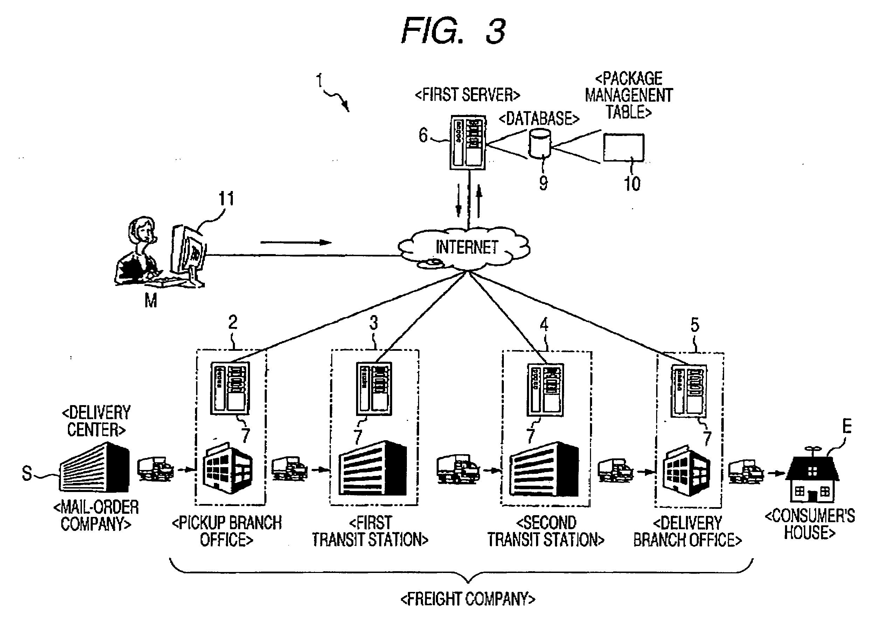

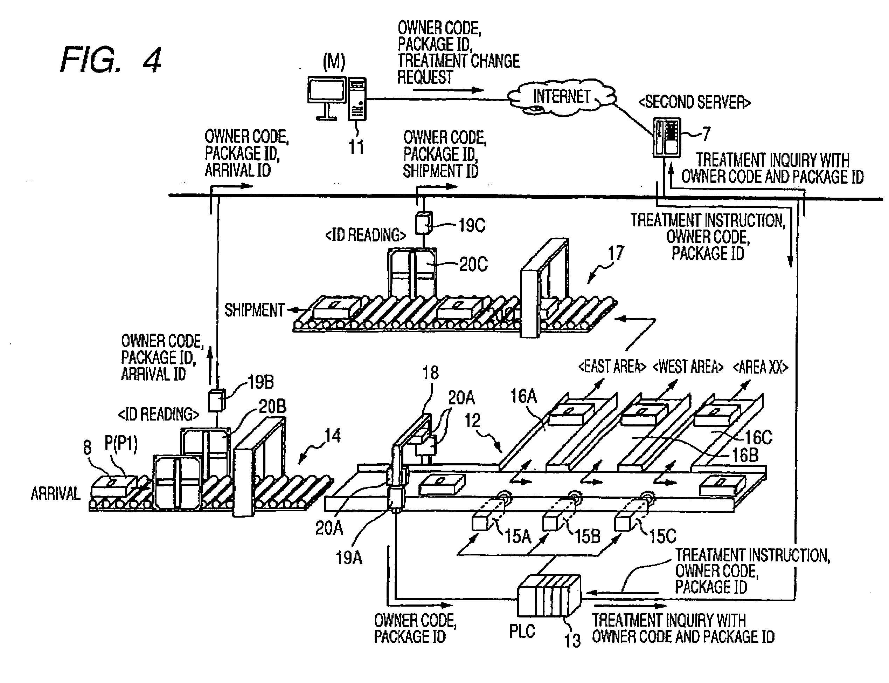

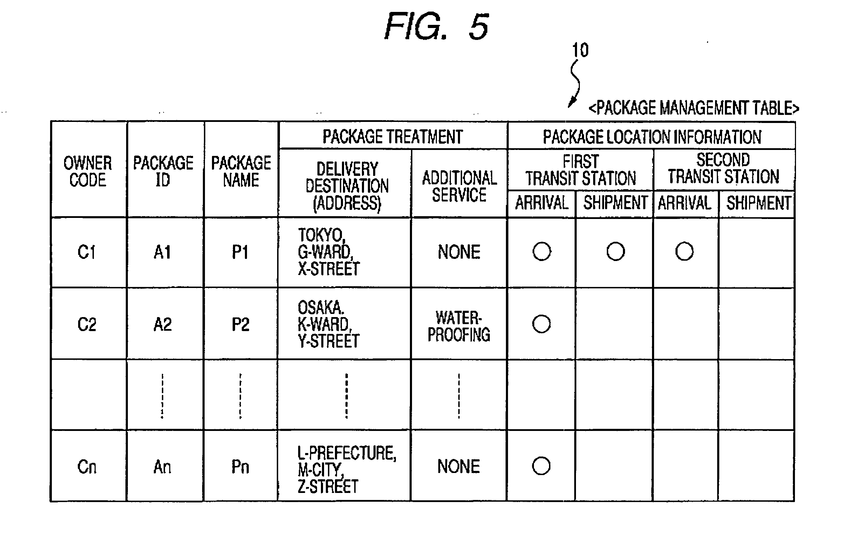

Fig. 3 is an entire view of a delivery service system to which the present invention is applied; Fig. 4 is a detailed descriptive view of a transit station of the delivery service system shown in Fig. 3; and Fig. 5 is a descriptive view of a package management table used in the delivery service system shown in Fig. 3.

In a delivery service system 1 shown in Fig. 3, transportation installations or facilities, such as a pickup branch office 2, a first transit station 3, a second transit station 4, and a delivery branch office 5, are taken as shared service resources available to everybody. Packages P (P1, P2, ..., Pn) to be delivered are taken as objects of provision of a service called "delivery"; a recipient who receives a benefit from the delivery service is taken as an owner M of the package; and an owner code to be described later is taken as a service-recipient code. Further, service provision processing performed by the delivery service system 1 is taken as treatment related to delivery of the package P, such as assortment of packages performed at the first transit station 3, the second transit station 4, and others. As is known from the following descriptions, in the system 1, an RFID reader/writer 19A and an appurtenant antenna 20A, which are shown in Fig. 4, serve a reader, and a controller 13 serves as a control right authorizer.

The delivery service system 1 shown in Fig. 3 is arranged in such a way that a commercial product purchased by mail-order sales is delivered as a package P from a delivery center S of a mail-order company to a consumer's house E by way of the pickup branch office 2, the first transit station 3, the second transit station 4, and the delivery branch office 5. The delivery service system 1 also has a first server 6 and a system configuration in which second servers 7 are installed in the pickup branch office 2, the first transit station 3, the second transit station 4, and the delivery branch office 5, respectively.

At the pickup branch office 2, the RFID tag 8 is attached to the package P sent from the delivery center S of the mail-order company (see Fig. 4). A code (hereinafter called an "owner code") imparted to the owner of the package P and an ID of the package P (hereinafter called a "package ID") are stored in a storage of the RFID tag 8. Treatment specifics of the package P are input to the second server 7 of the pickup branch office 2 by way of an unillustrated input device.

The "owner code" is an identification code for specifying an individual owner. For instance, an IP address or a MAC address may be adopted as the owner code, or another code capable of specifying and designating an owner can also be adopted. The "package ID" is a code for identifying a package which is imparted to each package P. Further, an expression "treatment specifics of the package P" includes information about processing provided by additional service relevant to delivery of a package; for example, waterproofing or cooling, as well as information about a destination of the package P (an address of a consumer).

The owner code and the package ID stored in the storage of the RFID tag 8 as mentioned above and the treatment specifics of the package P input to the second server 7 are transmitted, as a set of data, to the first server 6 from the second server 7 installed at the pickup branch office 2 by way of the internet. The data are registered in a package management table 10 provided in a package management database 9 of the first server 6.

The owner M (the mail-order company in the present embodiment) of the package P whose delivery is commissioned to the freight company makes an access to the first server 6 from an owner's terminal 11 by way of the Internet, thereby requesting as a request for a change in treatment of the package P an addition of additional service; for example, a change in a destination and waterproofing or cooling of the package, by the owner code and the package ID. Specifics of such a request for a change in treatment of the package is immediately transferred from the first server 6 to at least the second server 7 of the first transit station 3 and the second server 7 of the second transit station 4 by way of the internet, in conjunction with the owner code and the package ID used for the request; and the thus-transferred specifics are temporarily stored in the second servers 7. Moreover, the owner M can acquire the current location of the package P by utilization of package tracking service provided by the first server 6. Specifics of package tracking service will be described later.

A sorter 12 having a configuration, such as that shown in Fig. 4, is installed at the first transit station 3 and the second transit station 4, respectively. The sorters 12 are controlled by programmable controllers (hereinafter simply called "PLC 13") set in the respective transit stations 3 and 4. The sorter 12 is arranged in such a way that ejectors 15A to 15C push packages P sent through a package arrival path 14 to branch paths 16A to 16C of respective destinations, thereby sending the packages P to shipment paths 17 of respective destinations connected to the respective branch paths 16A to 16C.

A gate 18 through which the packages P pass is disposed upstream of the sorter 12, and the gate 18 is equipped with an RFID reader/writer 19A and an appurtenant antenna 20A thereof. The RFID reader/writer 19A reads, by way of the appurtenant antenna 20A, the service-recipient code (the owner code in the present embodiment) and the package ID from the RFID tag 8 of the package P passing through the gate 18, and outputs the thus-read code and ID to the PLC 13.

When performing assortment of a package into a destination by controlling the sorter 12, the PLC 13 sends an inquiry to the second server 7, while taking as a trigger the owner code and the package ID output from the RFID reader/writer 19A, through use of the owner code and the package ID. In accordance with an instruction from the second server 7 in response to the inquiry, package assortment is performed. Package assortment will be described in detail in descriptions about subsequent operations or processing.

In order to realize package tracking service, RFID reader/writers 19B and 19C and their appurtenant antennas 20B and 20C are set respectively along the package arrival path 14 and the shipment path 17 in the transit station. The RFID reader/writers 19B and 19C read an owner code and a package ID from the RFID tag 8 of the package P on the package arrival path 14 or the RFID tag 8 of the package P on the shipment path 17 by way of the appurtenant antennas 20B and 20C; and transmits the thus-read owner code and package ID to the second server 7 in the transit station by addition of an ID showing arrival or shipment (hereinafter called an "arrival code" and a "shipment code") to the owner code and the package ID.

Next, the second server 7 located in that transit station adds a transit station ID assigned to each transit station to the code, or the like, (the owner code, the package ID, the arrival code, or the shipment code) transmitted from the RFID reader/writers 19B and 19C as mentioned above, and transmits the code and the ID to the first server 6. In accordance with the code, or the like, transmitted from the second server 7 (the owner code, the package ID, the arrival code or the shipment code, or the transit station ID), the first server 6 specifies the location of the package P corresponding to the package ID and records the thus-specified location in the package management table 10.

For example, on the assumption that a package P1 assigned a package ID (A1) has passed through the package arrival path 14 of the second transit station 4, the owner code C1 of the package P1, the package ID (A1), the arrival code, and the transit station ID of the second transit station are transmitted as a set of data from the second server 7 of the second transit station 4 to the first server 6. In the package management table 10, data showing the location of the package P1 are recorded as location information pertaining to the package P1 corresponding to the package ID (A1) as a result of; for example, a package arrival field of the second transit station 4 being checked with a circle as shown in Fig. 5, or the like.

Operation or processing of the entire delivery service system 1 configured as described above is now described, In the following descriptions, an explanation is provided while a package P1 (an owner code of the package P1 is assumed to be C1 having the package ID (A1) is taken as an example.

According to the delivery service system 1, a commercial product purchased through mail-order sales is delivered as the package P1 from the delivery center S of the mail-order company to the pickup branch office 2. In the pickup branch office 2, the RFID tag 8 is attached to the package P1, and the owner code C1 and the package ID (A1) are written into the RFID tag 8 of the package P1 by an unillustrated RFID reader/writer located in the pickup branch office 2. The package P1 with the RFID tag 8 that has finished undergoing writing is delivered from the pickup branch office 2 to the first transit station 3. The owner code C1, the package ID (A1), and specifics of treatment of the package P1 are registered in the package management table 10 of the package management database 9.

The package P1 arrived at the first transit station 3 is transported to the sorter 12 by way of the package arrival path 14. During the course of the package P1 passing through the gate 18 located upstream of the sorter, the RFID reader/writer 19A and its appurtenant antenna 20A read, from the RFID tag 8 of the package P1, the owner code C1 and the package ID (A1), and the thus-read IDs are input to the PLC 13.

Next, the PLC 13 sends to the second server 7 an inquiry about the way of processing the package P1 having the package ID (A1), by the package code C1 and the package ID (A1), while taking an input of the owner code C1 and the package ID (A1) as a trigger or a causal factor, and awaits a treatment instruction pertaining to the package P1.

The second server 7 received the inquiry ascertains whether or not specifics of a request for a change in treatment made by the owner specified by the owner code C1 used for the inquiry are temporarily stored as a treatment instruction, through use of the owner code C1 and the package ID (A1). When the request is ascertained not to be stored, a reference is made to the package management table 10 in the package management database 9 by taking as a search key the owner code C1 and the package ID (A1) used for the inquiry, thereby acquiring specifics of treatment of the package P1 registered in correspondence with the package ID (A1). In the present embodiment, when a reference is made to the package management table 10 shown in Fig. 5, the destination of the package P1 is "Tokyo," and additional service is set to "None." In this case, the second server 7 acquires specifics of treatment of the package P1; namely, "east area" and "no additional service"; and sends a treatment instruction to the PLC 13 that serves as the source of the inquiry, so as to process the package P1 in accordance with the specifics of processing the package P1 of the package ID (A1) to which the inquiry has been made. In order to enable the PLC 13 to determine the nature of the owner and the nature of the package to which the treatment instruction is made, the owner code C1 and the package ID (A1) used for an inquiry are also sent to the PLC 13 in conjunction with the treatment instruction.

The PLC 13 received such a treatment instruction ascertains a match between the owner code C1 sent along with the treatment instruction and the owner code sent from the RFID reader/writer 19A. When a match exists, a control right (in the present embodiment, a right that enables the owner to control transportation treatment, such as setting or changing of treatment related to delivery of the package P1, as required) is given to the owner designated by the owner code C1, and the package P1 of the owner acquired the control right is treated in accordance with the treatment instruction.

Specifically, the PLC 13 activates a corresponding ejector 15A in accordance with the treatment instruction. The ejector 15A pushes the package P1 specified by the owner code C1 and the package ID (A1) sent along with the treatment instruction to the branch path 16A of the destination. In the present embodiment, as mentioned previously, the PLC 13 has already received the treatment instruction "east area" with regard to the package P1. Hence, the PLC 13 selects the ejector 15A assigned to the east area from the plurality of ejectors 15A to 15C, and the thus-selected ejector 15A pushes the package P1 to the branch path 16A of the east area.

The package P1 pushed into the branch path 16A of the east area is next delivered to the second transit station 4 of the east area and further subjected to more-detailed sorting for the destination (e.g., a zone). Finally, the package P1 is delivered to the consumer's house E by way of the delivery branch office 5. The second transit station 4 merely differs from the first transit station 3 in that packages are sorted in a more detailed manner. In other respects, the second transit station 4 is the same as the first transit station 3 in terms of an equipment configuration and treatment specifics, and hence its detailed explanation is omitted.

Procedures along which the owner changes the above-exemplified specifics of treatment of the package P1 will now be described.

### (Procedure 1)

First, it is better for the owner M to acquire and ascertain the current location of the package P1 by making an access from its terminal 11 to the first server 6 and by utilization of package tracking service provided by the first server 6. In order to acquire the current location of the package P1, the essential requirement is to send the package ID (A1) of the package P1 to the first server 6, to thus make an inquiry about the current location of the package P1. Next, the first server 6 searches the package management database 9 by taking the package ID (A1) as a search key, thereby extracting the location of the package P1 corresponding to the package ID (A1) from the package management table 10 of the package management database 9 and submitting the location of the package P1 to the owner M that sent the package ID (A1). Since Procedure 1 is for enabling the owner M to ascertain the location of the package P1, Procedure 1 may also be omitted when ascertainment is not required.

### (Procedure 2)

The owner M transmits to the first server 6 specifics of a request for a change in treatment of the package P1 along with the owner code C1 and the package ID (A1). Next, the owner code C1. the package ID (A1), and specifics of the request for a change in treatment of the package P1 are transferred, as a set of data, from the first server 6 to the second server 7, and the thus-transferred data are temporarily held in the second server 7. Subsequently, the second server 7 can ascertain whether or not the specifics of the request for a change in treatment made by the owner M are temporarily stored as a treatment instruction in the server. The second server 7 ascertained temporary storage of the request prioritizes the thus-temporarily-held treatment instruction made by the owner M; namely, the specifics of the request for a change in treatment of the package P1 made by the owner M, and sends a treatment instruction to the PLC 13 so as to process the package P1 of the owner M in accordance with the specifics of the request for a change. The owner code C1 and the package ID (A1) used for the inquiry are sent, in the same manner as mentioned previously, to the PLC 13 in conjunction with the treatment instruction conforming to such specifics of the request for a change made by the owner M.

The PLC 13 received the treatment instruction conforming to such specifics of the request for a change made by the owner M ascertains a match between the owner code C1 sent along with the treatment instruction and the owner code sent from the RFID reader/writer 19A. When a match exists, a control right is given to the owner M specified by the owner code C1, and the package P1 of the owner M acquired the control right is processed in accordance with a treatment instruction conforming to the specifics of the request for a change made by the owner M.

For instance, when the treatment instruction conforming to such specifics of the request for a change made by the owner M include waterproofing, the package P1 is waterproofed by an unillustrated waterproofing facility disposed at a position between the gate 18 located upstream of the sorter and a downstream of the shipment path 17. As mentioned previously, treatment which is not susceptible to a change is performed in conformance with the specifics of treatment of the package P1 acquired by reference to the package management table 10 provided in the package management database 9.

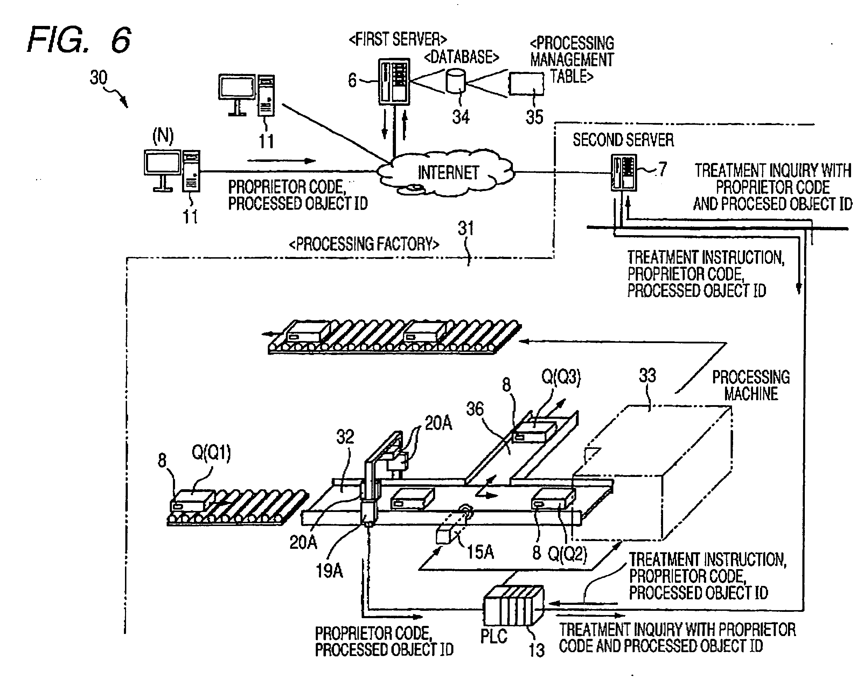

Fig. 6 is a descriptive view of a processing service system to which the present invention is applied. In a processing service system 30 shown in Fig. 6, a processing machine 33 placed in a processing factory 31 is taken as a shared service resource available for everybody. An object Q to be processed by the processing machine 33 is taken as an object of provision of a service. A recipient who receives a benefit provided by processing service is taken as a proprietor of the object Q, and a code assigned to the proprietor is taken as a service-recipient code. Service provision processing performed by the processing service system 30 is processing for machining the object Q by the processing machine 33. As will be understood from the following descriptions, in the system 30, the RFID reader/writer 19A shown in Fig. 6 and its appurtenant antenna 20A serve as a reader, and the PLC 13 serves as a control right authorizer.

In the processing service system 30 shown in Fig. 6, the object Q is provided with the RFID tag 8 storing a code imparted to a proprietor N of the object Q (hereinafter called a "proprietor code") and an ID imparted to the object Q (hereinafter called a "object ID"). The object Q equipped with the RFID tag 8 is carried to the processing machine 33 by way of a transfer path 32 in the processing factory 31. In the middle of transfer operation, the proprietor code and the object ID are read from the RFID tag 8 of the object Q by way of the RFID reader/writer 19A and its appurtenant antenna 20A, and the thus-read code and ID are output to the PLC 13 in the processing factory 31.

Next, the PLC 13 sends to the second server 7 an inquiry about the way of processing the object Q having the object ID, while taking as a trigger an input of the proprietor code and the object ID, through use of the proprietor code and the object ID; and awaits an instruction about processing of the object Q.

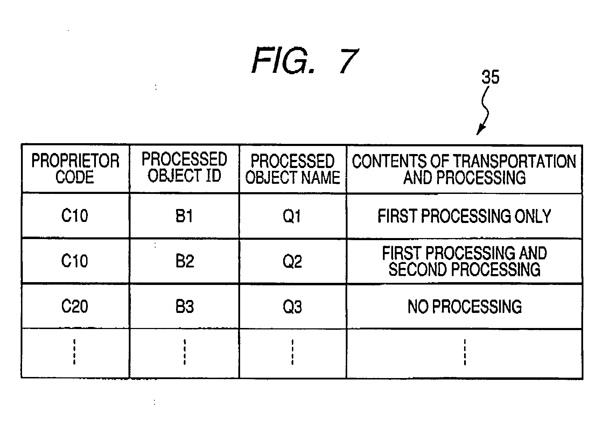

The second server 7 received the inquiry ascertains whether or not specifics of a request for a change in treatment made by the proprietor specified by the proprietor code used for the inquiry are temporarily stored as a treatment instruction in the server, through use of the proprietor code and the object ID. When the request is ascertained not to be stored, a reference is made to the processing management table 35 that is provided in the processing management database 34 of the first server 6 and that is shown in Fig. 7, by taking as a search key the proprietor code and the object ID used for the inquiry. When the specifics of processing, such as transfer or machining, of the object Q corresponding to the object ID are registered in the processing management table 35, a treatment instruction is sent to the PLC 13 that serves as the source of the inquiry, so as to process, in conformance with the specifics of processing such as transfer or machining, the object Q corresponding to the object ID to which the inquiry has been made. In order to enable the PLC 13 to determine the nature of the proprietor and the nature of the object to which the treatment instruction is made, the proprietor code and the object ID used for an inquiry are also sent to the PLC 13 in conjunction with the treatment instruction.

The PLC 13 received such a treatment instruction ascertains a match between the proprietor code sent along with the treatment instruction and the proprietor code sent from the RFID reader/writer 19A. When a match exists, a control right (in the present embodiment, a right that enables the proprietor of an object Q1 to control machining-related treatment, such as setting or changing of treatment related to machining of the object Q1 corresponding to an object ID; for example (B1), as required) is given to the proprietor designated by the proprietor code, and the proprietor's object acquired the control right performs processing in accordance with the treatment instruction.

For example, as registered in the processing management table 35 shown in Fig. 7, on the assumption that the PLC 13 is given a treatment instruction for subjecting the object Q1 corresponding to the object ID (B1) to "first processing only," the PLC 13 outputs to the processing machine 33 a signal for activating only an unillustrated first processing machine, and the object Q1 is subjected solely to first processing. Further, on the assumption that a treatment instruction for subjecting an object Q2 corresponding to a processing ID (B2) to "first processing and second processing" is sent to the PLC 13, a signal for activating unillustrated first and second processing machines is output from the PLC 13 to the processing machine 33, and the object Q2 is subjected to first and second processing. On the assumption that a treatment instruction for taking an object Q3 corresponding to an object ID (B3) as a "no processing" is sent to the PLC 13, a signal is output from the PLC 13 to the ejector 15A provided along the transfer path 32. In a stage prior to the processing machine 33, the ejector 15A pushes the object Q3 to a non-processing path 36, so that the object Q3 is not processed at all.

Specifics of processing of the foregoing object Q (Q1, Q2, and Q3) can be set or changed by an instruction made by the proprietor N of the object Q. This will be described, as follows, by reference to an example where specifics of processing of the object Q1 are changed.

At the outset, the proprietor N of the object Q1 transmits specifics of a request for a change in treatment of the object Q1 from his/her terminal 11 to the first server 6 on the basis of the proprietor code and the object ID (B1) of the object Q1. Next, the specifics of the request for a change in treatment, the proprietor code, and the object ID (B1) of the object Q1 are transferred as a set of data from the first server 6 to the second server 7, and the thus-transferred data are temporarily stored in the second server 7. As a result, the second server 7 can ascertain whether or not the specifics of the request for a change in treatment issued by the proprietor N are temporarily stored as a treatment instruction in the server. The second server 7 ascertained temporal storage of the specifics of the request prioritizes the thus-temporarily stored treatment instruction from the proprietor N; namely, the specifics of the request for a change in treatment of the object Q1 from the proprietor N, and transmits the treatment instruction to the PLC 13 so as to process the object Q1 of the proprietor N in accordance with the specifics of the request for a change. The proprietor code used for the inquiry in conjunction with such a treatment instruction exactly conforming to the request for a change issued by the proprietor N and the object ID (B1) are sent to the PLC 13 in the same manner as mentioned above.

The PLC 13 received the treatment instruction exactly conforming to the request for a change issued by the proprietor N checks a match between the proprietor code sent along with such a treatment instruction and the proprietor code sent from the RFID reader/writer 19A. When a match exists, a control right is given to the proprietor N specified by the proprietor code, and the object Q1 of the proprietor N acquired the control right is processed in accordance with the treatment instruction.

For instance, when the treatment instruction exactly conforming to the specifics of the request for a change issued by the proprietor N includes subjecting the object Q1 to second processing as well as subjecting the same to first processing, the treatment instruction sent from the second server 7 to the PLC 13 is changed from "first processing only" to "first processing and second processing." As a result, a signal for activating the first and second processing machines is output from the PLC 13 to the processing machine 33, whereupon the object Q1 is subjected to first and second processing.

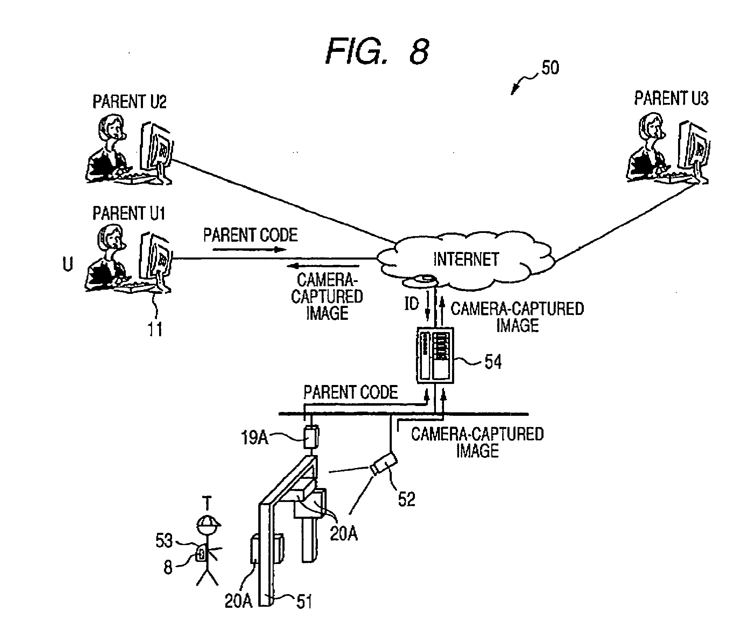

Fig. 8 is an overall view of a system for ascertaining school attendance or leaving school to which the present invention is applied. In this system 50, an imaging device 52 including a camera is taken as a shared service resource available for everybody. A child (a kindergarten pupil T in the present embodiment) captured by the camera of the imaging device 52 is taken as an object which is offered a service; a recipient who acquires a benefit from the service is taken as a legal guardian (a parent U of the kindergarten pupil T in the present embodiment) of the child; and a code given to the legal guardian is taken as a service-recipient code. Service provision processing performed by the system 50 is assumed to be processing for providing, by an image captured by the camera, the figure of the kindergarten pupil T who goes to or leaves school. In addition, as will be seen from the following descriptions, the RFID reader/writer 19A and its appurtenant antenna 20A, which are shown in Fig. 8, serve as a reader in the system 50; and the server 54 shown in the same drawing also serves as a control right authorizer.

In order to implement service provision processing, the RFID tag 8 is attached to a knapsack 53 of the kindergarten pupil in the system 50, and the code given to the parent U of the kindergarten pupil T (hereinafter called a "parent code") is written and registered in the storage of the RFID tag 8. The RFID reader/writer 19A and its appurtenant antenna 20A are set on a gate 51 where the kindergarten pupil T passes when going to or leaving school; the service-recipient code (the "parent code" in the embodiment) read from the RFID tag 8 of the kindergarten pupil T who passes through the gate 51 is read by way of the RFID reader/writer 19A and its appurtenant antenna 20A; and the thus-read parent code is output to the server 54. The gate 51 is further provided with the imaging device 52 that captures an image of the kindergarten pupil who goes to or leaves school, and an image captured by the imaging device 52 is also output to the server 54.

The parent U transmits his/her parent code to the server 54 from the terminal 11 by way of the Internet. Next, the server 54 serves as a control right authorizer so that a control right to service provision processing (a control right to controllably transmit an image captured by the camera of the imaging device 52 to the server in the present embodiment) is sent from the server 54 to the source of transmission of the parent code read by the RFID reader/writer 19A; namely, the terminal 11 of the parent U designated by the parent code. When the parent code of the parent read from the RFID tag 8 of the kindergarten pupil T passing through the gate 51 is held in the storage of the server 54 within a prescribed time period before or after provision of the control right, the server 54 transmits an image captured by the camera of the imaging device 52 to the terminal 11 of the parent U acquired the control right by way of the Internet. From the above descriptions, the parent U can ascertain the figure on a monitor of the terminal 11 at timing of school attendance/leaving when his/her child passes through the gate 51,

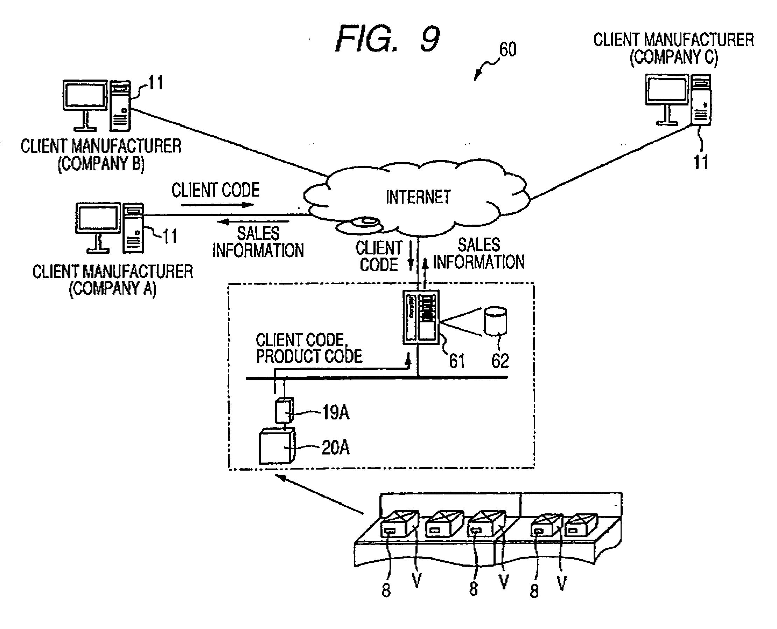

Fig. 9 is an overall view of a sales information distributing service system 60 to which the present invention is applied. In the sales information distributing service system 60, a server 61 for distributing sales information about a commercial product V to a client manufacturer W is taken as a shared service resource available for everybody. The commercial product V is taken as an object of service provision; a recipient who acquires a benefit from service is taken as the client manufacture W of the commercial product V; and a code given to the client manufacturer W is taken as a service-recipient code. Further, service provision processing performed by the service system is taken as processing for distributing sales information about the commercial product V to the client manufacturer W. Furthermore, as will be seen from the following descriptions, the RFID reader/writer 19A and its appurtenant antenna 20A, which are shown in Fig. 9, serve as a reader in the system 60; and a server 61 shown in the same drawing serves as a control right authorizer.

In order to implement service provision processing, the RFID tag 8 is attached to each commercial product V in the sales information distributing service system 60, and a code given to the commercial product V (hereinafter called a "commercial product code") and a code given to a client manufacturer of the commercial product V (hereinafter called a "client code") are beforehand written and registered in the storage in the RFID tag 8. The RFID reader/writer 19A and its appurtenant antenna 20A are set at a location where the commercial product V inevitably passes when purchased, such as a checkout station in a store. The client code and the commercial product code are read, by way of the RFID reader/writer 19A and its appurtenant antenna 20A, from the RFID tag 8 of the commercial product V passing through the location. The thus-read client code and commercial product code are transmitted to the server 61 from the RFID reader/writer 19A. In accordance with the thus-transmitted client code and the commercial product code, the server 61 computes sales information about the commercial product (e.g., the number of sold commercial products and the amount of sales achieved for each commercial product and the total amounts of sales of commercial products of each manufacturer) for each client manufacturer W, and stores the thus-computed information in a commercial product management database 62 of the server 61.

The client manufacturer W transmits its client code from the terminal 11 to the server 61 by way of the Internet. Next, the server 61 serves as a control right authorizer so that a control right to service provision processing (a right to control the server 61 so as to transmit to the manufacturer sales information about commercial products of the manufacturer stored in the commercial product management database 62 in the present embodiment) is given from the server 61 to the source of transmission of the client code read by the RFID reader/writer 19A. Namely, the terminal 11 of the client manufacture W designated by the client code. The client manufacturer W acquired the control right becomes able to receive from the server 61 only sales information about commercial products of the manufacturer. Accordingly, the sales information distributing service system to which the present invention is applied is basically different from sales information distributing service, such as a retail link, and sales information about commercial products of one manufacture is not provided to competitive client manufacturers.
The present invention is based on Japanese Patent Application No. 2005-314509 filed October 28, 2005, the contents of which are herein incorporated by reference.

## Claims

1. A system for controlling a shared service resource, comprising:
a reader, configured to read a service-recipient code which is assigned to an object to which a service provided by the shared service resource; and
a control right authorizer, configured to authorize a control right which enables to control the service with respect to the object to a recipient designated by the service-recipient code.

2. A system for controlling a shared service resource, comprising:
a reader;
a server; and
a controller, wherein:
the reader is configured to read a service-recipient code which is assigned to an object to which a service provided by the shared service resource, and configured to transmit the service-recipient code to the controller,
the server is configured to check, when an inquiry is received from the controller with the service-recipient code, whether an instruction from a recipient designated by the service-recipient code has been stored in the server, and configured to output, when the instruction has been stored, the service-recipient code and a command for causing the controller to treat the object in accordance with the instruction to the controller; and
the controller is configured to issue, when the service-recipient code transmitted from the reader is inputted, the inquiry with the service-recipient code with respect to the server, and configured to check whether a match is found between the service-recipient code sent from the server together with the command and the service-recipient code sent from the reader, configured to authorize, when the match is found, a control right to the recipient designated by the service-recipient code, and configured to treat the object in accordance with the instruction from the recipient authorized with the control right.

3. The system as set forth in claim 2, wherein:
the instruction includes an instruction for changing the service which has been requested from the recipient.

4. The system as set forth in any one of claims 1 to 3, wherein:
the service-recipient code is stored in a storage provided in an RFID tag attached to the object; and
the reader comprises an RFID reader/writer and an appurtenant antenna which are configured to read the service-recipient code from the RFID tag.

5. The system as set forth in any one of claims 1 to 3, wherein:
the shared service resource includes transportation installations or facilities including a pickup branch office, a transit station and a delivery branch office;
the object is a package delivered by the transportation installations or facilities;
the recipient is an owner of the package; and
the service is a treatment in connection with the delivery of the package including an assortment performed in the transportation installations or facilities.

6. The system as set forth in any one of claims 1 to 3, wherein:
the shared service resource is a processing machine disposed in a processing factory;
the object is an article to be processed by the processing machine;
the recipient is a proprietor of the article; and
the service is processing with respect to the article performed by the processing machine.

7. The system as set forth in any one of claims 1 to 3, wherein:
the shared service resource is an imaging device including a camera;
the object is a child to be captured by the camera;
the recipient is a legal guardian of the child; and
the service is a provision of a camera-captured image of the child who attends to or leaves from a school.

8. The system as set forth in any one of claims 1 to 3, wherein:
the shared service resource is a server configured to distribute sales information of a commercial product to a client manufacturer;
the object is the commercial product;
the recipient is the client manufacturer; and
the service is a distribution of the sales information to the client manufacturer.

9. A method for controlling a shared service resource, comprising:
reading a service-recipient code which is assigned to an object to which a service provided by the shared service resource; and
authorizing a control right which enables to control the service with respect to the object to a recipient designated by the service-recipient code.
